# EUROPEAN PATENT APPLICATION

(11) **EP 4 161 054 A1**
(43) Date of publication of application: **05.04.2023**
(21) Application number: 20938120.1
(22) Date of filing: 28.05.2020
(51) Int. Cl.: H04N 5/232

(54) **ANCHOR POINT INFORMATION PROCESSING METHOD, APPARATUS AND DEVICE AND STORAGE MEDIUM**

(71) Applicant: Beijing Xiaomi Mobile Software Co., Ltd. Nanjing Branch, Jianye District Nanjing Jiangsu 210019 (CN); Beijing Xiaomi Mobile Software Co., Ltd., Beijing 100085 (CN)
(72) Inventor: LIN, Xingsheng, Beijing 100085 (CN)
(74) Representative: dompatent von Kreisler Selting Werner - Partnerschaft von Patent- und Rechtsanwälten mbB
(86) International application number: PCT/CN2020/092991
(87) International publication number: WO 2021/237592

(57) **Abstract**

The present invention relates to an anchor information processing method, apparatus, device and storage medium. The method includes: receiving a request for obtaining augmented reality (AR) anchor information, wherein the request includes scene information on a current scene in which a terminal is located, and the scene information includes geographic location information and one or more current image-shooting conditions; determining information on candidate anchors associated with the geographic location information; and obtaining, from the information on the candidate anchors, information on one or more AR anchors matching the one or more current image-shooting conditions, where the one or more AR anchors corresponding to the AR anchor information indicate first image-shooting information of a camera at the time of acquiring a sample image, and the first image-shooting information includes at least one of: space coordinate information, or attitude information. According to the present invention, the terminal can perform an image acquisition based on image-shooting information indicated by one or more AR anchors, which helps to obtain images with more aesthetic meanings and meets a user's requirement of obtaining high-quality images.

## Description

### TECHNICAL FIELD

The present invention relates to the field of image processing technology, and in particular, relates to an anchor information processing method, apparatus, device and storage medium.

### BACKGROUND

In the wake of developments in intelligent terminal technologies, an intelligent terminal is used by a user to shoot images more and more frequently. With an increment of image-shooting frequency and a popularity of various social networks, an aesthetic problem of the images is increasingly valued. In related arts, an image-shooting quality is usually improved by optimizing a hardware or an algorithm of a camera itself. However, such a scheme can only improve the image-shooting quality, but play a limited role in improving the aesthetic of the images, which cannot meet the user's requirements.

### SUMMARY

In order to overcome the problems in the related arts, embodiments of the present invention provide an anchor information processing method, apparatus, device, and storage medium to solve the defects in the related arts.

According to a first aspect of the embodiments of the present invention, an anchor information processing method is provided, including:
receiving a request for obtaining augmented reality (AR) anchor information, where the request includes scene information on a current scene in which a terminal is located, and the scene information includes geographic location information and one or more current image-shooting conditions;
determining information on candidate anchors associated with the geographic location information; and
obtaining, from the information on the candidate anchors, information on one or more AR anchors matching the one or more current image-shooting conditions, where the one or more AR anchors corresponding to the AR anchor information indicate first image-shooting information of a camera at the time of acquiring a sample image, and the first image-shooting information includes at least one of: space coordinate information, or attitude information.

In one example, the first image-shooting information further includes at least one of a filter type or a zoom ratio.

In one example, the one or more current image-shooting conditions include at least one of: time, weather, or light intensity of the current scene.

In one example, the one or more current image-shooting conditions include the time and the weather of the current scene, and obtaining, from the information on the candidate anchors, the information on the one or more AR anchors matching the one or more current image-shooting conditions includes:
obtaining, from the information on the candidate anchors, information on to-be-selected AR anchors having similar image-shooting time as the time of the current scene; and
obtaining, from the information on the to-be-selected AR anchors, the information on the one or more AR anchors having similar image-shooting weather as the weather of the current scene.

In one example, the one or more current image-shooting conditions include the time and the light intensity of the current scene, and obtaining, from the information on the candidate anchors, the information on the one or more AR anchors matching the one or more current image-shooting conditions includes:
obtaining, from the information on the candidate anchors, information on to-be-selected AR anchors having similar image-shooting time as the time of the current scene; and
obtaining, from the information on the to-be-selected AR anchors, the information on the one or more AR anchors having similar image-shooting light intensity as the light intensity of the current scene.

In one example, the one or more current image-shooting conditions include the time, the weather and the light intensity of the current scene, and obtaining, from the information on the candidate anchors, the information on the one or more AR anchors matching the one or more current image-shooting conditions includes:
obtaining, from the information on the candidate anchors, information on first to-be-selected AR anchors having similar image-shooting time as the time of the current scene;
obtaining, from the information on the first to-be-selected AR anchors, information on second to-be-selected AR anchors having similar image-shooting weather as the weather of the current scene; and
obtaining, from the information on the second to-be-selected AR anchors, the information on the one or more AR anchors having similar image-shooting light intensity as the light intensity of the current scene.

In one example, the method further includes configuring the scene information by:
receiving a scene configuration instruction, where the configuration instruction is used to configure the scene information for obtaining the information on the one or more AR anchors;
generating an association relationship between the scene information and the information on each AR anchor according to the configuration instruction; and
configuring the scene information based on the association relationships.

According to a second aspect of the embodiments of the present invention, an image acquisition method, applicable to a terminal, is provided and includes:
obtaining, in response to a first image acquisition instruction from a terminal, scene information on a current scene in which the terminal is located, where the scene information includes geographic location information and one or more current image-shooting conditions;
sending a request for obtaining augmented reality (AR) anchor information to a server-side, where the request includes the scene information, and where one or more AR anchors corresponding to the AR anchor information indicate first image-shooting information of a camera at the time of acquiring a sample image, and the first image-shooting information includes at least one of: space coordinate information, or attitude information;
displaying the one or more AR anchors in a viewfinder frame of the terminal in accordance with the information on the one or more AR anchors returned by the server-side in response to the request; and
performing an image acquisition based on the first image-shooting information indicated by the one or more AR anchors.

In one example, the first image-shooting information further includes at least one of a filter type or a zoom ratio.

In one example, the one or more current image-shooting conditions include at least one of: time, weather, or light intensity of the current scene.

In one example, the scene information further includes at least one of data streams of the viewfinder frame; and
the information on the one or more AR anchors includes at least one of: a displaying form of each AR anchor, an identifier of an application package to be switched, coordinates of each AR anchor displayed in the viewfinder frame, a prompting way, or a way of displaying a reminder of image acquisition.

In one example, the method further includes configuring the scene information by:
receiving a scene configuration instruction, where the configuration instruction is used to configure the scene information for obtaining the information on the one or more AR anchors;
generating an association relationship between the scene information and the information on each AR anchor according to the configuration instruction; and
configuring the scene information based on the association relationships.

In one example, the one or more AR anchors outline an AR viewfinder indication box; and
performing the image acquisition based on the first image-shooting information indicated by the one or more AR anchors includes:
activating, in response to detecting that the viewfinder frame matches the AR viewfinder indication box, a camera of the terminal to perform the image acquisition.

In one example, the method further includes:
generating a prompt message, where the prompt message is configured to inquire whether to display the one or more AR anchors; and
displaying, in response to receiving a display instruction for displaying the one or more AR anchors, the one or more AR anchors in the viewfinder frame of the terminal in accordance with the information on the one or more AR anchors returned by the server-side in response to the request.

In one example, performing the image acquisition based on the first image-shooting information indicated by the one or more AR anchors includes:
initiating, in response to detecting that second image-shooting information of the terminal matches the first image-shooting information, a countdown timer with a preset duration; and
acquiring image information in the viewfinder frame of the terminal after the countdown timer runs out.

In one example, performing the image acquisition based on the first image-shooting information indicated by the one or more AR anchors includes:
generating, in response to detecting that second image-shooting information of the terminal matches the first image-shooting information, an image acquisition reminder;
receiving a second image acquisition instruction returned in response to the image acquisition reminder;
activating, in response to the second image acquisition instruction, a camera of the terminal to perform the image acquisition.

According to a third aspect of the embodiments of the present invention, an anchor information processing apparatus is provided, including:
an information request receiving module, configured to receive a request for obtaining augmented reality (AR) anchor information, where the request includes scene information on a current scene in which a terminal is located, and the scene information includes geographic location information and one or more current image-shooting conditions;
a candidate anchor determining module, configured to determine information on candidate anchors associated with the geographic location information; and
an anchor information obtaining module, configured to obtain, from the information on the candidate anchors, information on one or more AR anchors matching the one or more current image-shooting conditions, where the one or more AR anchors corresponding to the AR anchor information indicate first image-shooting information of a camera at the time of acquiring a sample image, and the first image-shooting information includes at least one of: space coordinate information, or attitude information.

In one example, the first image-shooting information further includes at least one of a filter type or a zoom ratio.

In one example, the one or more current image-shooting conditions include at least one of: time, weather, or light intensity of the current scene.

In one example, when the current image-shooting conditions include the time and the weather of the current scene, and the anchor information obtaining module includes:
a first to-be-selected anchor unit, configured to obtain, from the information on the candidate anchors, information on to-be-selected AR anchors having similar image-shooting time as the time of the current scene; and
a first information obtaining unit, configured to obtain, from the information on the to-be-selected AR anchors, the information on the one or more AR anchors having similar image-shooting weather as the weather of the current scene.

In one example, the one or more current image-shooting conditions include the time and the light intensity of the current scene, and the anchor information obtaining module includes:
a second to-be-selected anchor unit, configured for subsequent anchor obtaining units and configured to obtain, from the information on the candidate anchors, information on to-be-selected AR anchors having similar image-shooting time as the time of the current scene; and
a second information obtaining unit, configured to obtain, from the information on the to-be-selected AR anchors, the information on the one or more AR anchors having similar image-shooting light intensity as the light intensity of the current scene.

In one example, the one or more current image-shooting conditions include the time, the weather and the light intensity of the current scene, and the anchor information obtaining module includes:
a first information selecting unit, configured to obtain, from the information on the candidate anchors, information on first to-be-selected AR anchors having similar image-shooting time as the time of the current scene;
a second information selecting unit, configured to obtain, from the information on the first to-be-selected AR anchors, information on second to-be-selected AR anchors having similar image-shooting weather as the weather of the current scene; and
a third information obtaining unit, configured to obtain, from the information on the second to-be-selected AR anchors, the information on the one or more AR anchors having similar image-shooting light intensity as the light intensity of the current scene.

In one example, the apparatus further includes a scene information configuring module;
where the scene information configuring module includes:
a configuration instruction receiving unit, configured to receive a scene configuration instruction, where the configuration instruction is used to configure the scene information for obtaining the information on the one or more AR anchors;
an association relationship generating unit, configured to generate an association relationship between the scene information and the information on each AR anchor according to the configuration instruction; and
a scene information configuring unit, configured to configure the scene information based on the association relationships.

According to a fourth aspect of the embodiments of the present invention, an image acquisition apparatus is provided and includes:
a scene obtaining module, configured to obtain, in response to a first image acquisition instruction from a terminal, scene information on a current scene in which the terminal is located, where the scene information includes geographic location information and one or more current image-shooting conditions;
a request sending module, configured to send a request for obtaining augmented reality (AR) anchor information to a server-side, where the request includes the scene information, and where one or more AR anchors corresponding to the AR anchor information indicate first image-shooting information of a camera at the time of acquiring a sample image, and the first image-shooting information includes at least one of: space coordinate information, or attitude information;
an anchor displaying module, configured to display the one or more AR anchors in a viewfinder frame of the terminal in accordance with the information on the one or more AR anchors returned by the server-side in response to the request; and
an image acquiring module, configured to perform an image acquisition based on the first image-shooting information indicated by the one or more AR anchors.

In one example, the first image-shooting information further includes at least one of a filter type or a zoom ratio.

In one example, the one or more current image-shooting conditions include at least one of: time, weather, or light intensity of the current scene.

In one example, the scene information further includes at least one of data streams of the viewfinder frame; and
the information on the one or more AR anchors includes at least one of: a displaying form of each AR anchor, an identifier of an application package to be switched, coordinates of each AR anchor displayed in the viewfinder frame, a prompting way, or a way of displaying a reminder of image acquisition.

In one example, the apparatus further includes a scene information configuring module;
where the scene information configuring module includes:
a configuration instruction receiving unit, configured to receive a scene configuration instruction, where the configuration instruction is used to configure the scene information for obtaining the information on the one or more AR anchors;
an association relationship generating unit, configured to generate an association relationship between the scene information and the information on each AR anchor according to the configuration instruction; and
a scene information configuring unit, configured to configure the scene information based on the association relationships.

In one example, the one or more AR anchors outline an AR viewfinder indication box; and
the image acquiring module is further configured to activate, in response to detecting that the viewfinder frame matches the AR viewfinder indication box, a camera of the terminal to perform the image acquisition.

In one example, the apparatus further includes:
a prompt generating module, configured to generate a prompt message, where the prompt message is configured to inquire whether to display the one or more AR anchors;
where the anchor displaying module is further configured to display, in response to receiving a display instruction for displaying the one or more AR anchors, the one or more AR anchors in the viewfinder frame of the terminal in accordance with the information on the one or more AR anchors returned by the server-side in response to the request.

In one example, the image acquiring module includes:
a countdown initiating unit, configured to initiate, in response to detecting that second image-shooting information of the terminal matches the first image-shooting information, a countdown timer with a preset duration; and
an image information acquiring unit, configured to acquire image information in the viewfinder frame of the terminal after the countdown timer runs out.

In one example, the image acquiring module includes:
a reminder generating unit, configured to generate, in response to detecting that second image-shooting information of the terminal matches the first image-shooting information, an image acquisition reminder;
an instruction receiving unit, configured to receive a second image acquisition instruction returned in response to the image acquisition reminder;
an image acquiring unit, configured to activate, in response to the second image acquisition instruction, a camera of the terminal to perform the image acquisition.

According to a fifth aspect of the embodiments of the present invention, an electronic device is provided, including:
one or more processors; and a memory for storing instructions executable by the one or more processors;

The one or more processors are configured to:
receive a request for obtaining augmented reality (AR) anchor information, where the request includes scene information on a current scene in which a terminal is located, and the scene information includes geographic location information and one or more current image-shooting conditions;
determine information on candidate anchors associated with the geographic location information; and
obtain, from the information on the candidate anchors, information on one or more AR anchors matching the one or more current image-shooting conditions, where the one or more AR anchors corresponding to the AR anchor information indicate first image-shooting information of a camera at the time of acquiring a sample image, and the first image-shooting information includes at least one of: space coordinate information, or attitude information.

According to a sixth aspect of the embodiments of the present invention, a computer-readable storage medium storing a computer program is provided, and the program, when being executed by one or more processors, implements:
receiving a request for obtaining augmented reality (AR) anchor information, where the request includes scene information on a current scene in which a terminal is located, and the scene information includes geographic location information and one or more current image-shooting conditions;
determining information on candidate anchors associated with the geographic location information; and
obtaining, from the information on the candidate anchors, information on one or more AR anchors matching the one or more current image-shooting conditions, where the one or more AR anchors corresponding to the AR anchor information indicate first image-shooting information of a camera at the time of acquiring a sample image, and the first image-shooting information includes at least one of: space coordinate information, or attitude information.

The solutions provided by the embodiments of the present invention may obtain the following beneficial effects.

Through receiving a request for obtaining AR anchor information, then determining information on candidate anchors associated with geographic location information and obtaining information on one or more AR anchors matching one or more current image-shooting conditions from the information on the candidate anchors, it is achieved according to the present invention that the one or more AR anchors corresponding to the AR anchor information indicate first image-shooting information of a camera at the time of acquiring a sample image. Since the information on the candidate anchors associated with the geographic location information is determined first and then the information on the one or more AR anchors matching the one or more current image-shooting conditions is obtained from the information on the candidate anchors, the information on the one or more AR anchors matching the current scene in which the terminal is located is determined more accurately, so as to provide an accurate reference for the terminal to subsequently display the one or more AR anchors in a viewfinder frame in accordance with the information on the one or more AR anchors. Thus, the terminal performs an image acquisition based on the first image-shooting information indicated by the one or more AR anchors, which helps a user to obtain images with more aesthetic meanings and meets a user's requirement of obtaining high-quality images.

It should be understood that the above general description and the following detailed description are only illustrative and explanatory, and are not intended to limit the present invention.

### BRIEF DESCRIPTION OF THE DRAWINGS

FIG. 1 illustrates a flowchart of an anchor information processing method according to an example.
FIG. 2 illustrates a flowchart of obtaining information on one or more AR anchors matching one or more current image-shooting conditions from information on candidate anchors according to an example.
FIG. 3 illustrates a flowchart of obtaining information on one or more AR anchors matching one or more current image-shooting conditions from information on candidate anchors according to another example.
FIG. 4 illustrates a flowchart of obtaining information on one or more AR anchors matching one or more current image-shooting conditions from information on candidate anchors according to another example.
FIG. 5 illustrates a flowchart of configuring scene information according to an example.
FIG. 6 illustrates a flowchart of an image acquisition method according to an example.
FIG. 7 illustrates a flowchart of configuring scene information according to an example.
FIG. 8 illustrates a flowchart of an image acquisition method according to another example.
FIG. 9 illustrates a flowchart of performing an image acquisition based on first image-shooting information indicated by one or more AR anchors according to an example.
FIG. 10 illustrates a flowchart of performing an image acquisition based on first image-shooting information indicated by one or more AR anchors according to another example.
FIG. 11 illustrates a schematic diagram of applying an image acquisition method according to an example.
FIG. 12 illustrates a block diagram of an anchor information processing apparatus according to an example.
FIG. 13 illustrates a block diagram of an anchor information processing apparatus according to another example.
FIG. 14 illustrates a block diagram of an image acquisition apparatus according to an example.
FIG. 15 illustrates a block diagram of an image acquisition apparatus according to another example.
FIG. 16 illustrates a block diagram of an electronic device according to an example. The accompanying drawings, which are incorporated in and constitute a part of this specification, illustrate examples consistent with the present invention and, together with the description, serve to explain the principles of the invention.

### DETAILED DESCRIPTION OF THE EMBODIMENTS

Embodiments will be described in detail here with the examples thereof illustrated in the drawings. Where the following descriptions involve the drawings, like numerals in different drawings refer to like or similar elements unless otherwise indicated. The illustrated examples below are not intended to represent all examples consistent with the present invention. Rather, they are merely examples of apparatuses and methods consistent with some aspects of the present invention as detailed in the appended claims.

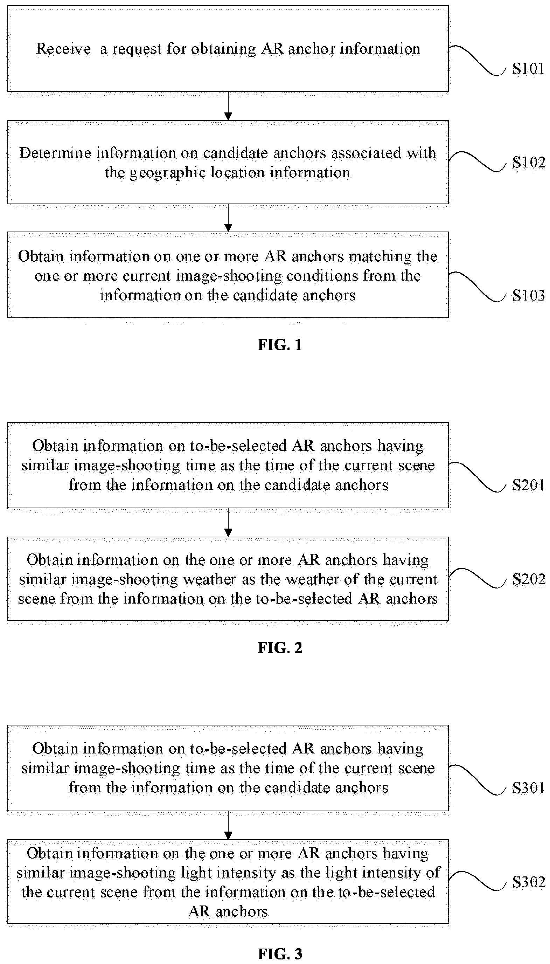

FIG. 1 illustrates a flowchart of an anchor information processing method according to an example. In the example, the anchor information processing method may be applied to a server-side (for example, a server or a server cluster composed of a plurality of servers). As illustrated in FIG 1, the method includes steps S101-S103.

At step S101, a request for obtaining augmented reality (AR) anchor information is received.

The request includes scene information on a current scene in which a terminal is located. The scene information includes geographic location information and one or more current image-shooting conditions (for example, time, weather, or light intensity, etc.).

In the example, after receiving a first image acquisition instruction, the terminal may obtain the scene information on the current scene in which the terminal is located, and then send the request for obtaining the AR anchor information to the server-side based on the scene information.

As an example, the terminal may obtain the geographic location information of the terminal through a global positioning system (GPS) module built in the terminal.

It should be noted that, besides through the GPS module built in the terminal, the geographic location information of the terminal may be obtained by a developer or a user in other ways according to actual service requirements, and the obtained results are also applicable to subsequent steps. The example is not intended to limit these ways.

As another example, the current time may be obtained through a built-in processor, the light intensity of the current scene may be obtained through a built-in sensor, and the weather of the current scene may be obtained through a weather application.

At step S 102, information on candidate anchors associated with the geographic location information is determined.

In the example, after receiving the request for obtaining the AR anchor information, the server-side may obtain the scene information from the request, and then determine the information on the candidate anchors associated with the geographic location information included in the scene information. It should be noted that information on one or more AR anchors meeting one or more conditions may be filtered from the information on the candidate anchors.

For example, the server-side may inquire about the information on the candidate anchors associated with the scene information based on pre-built association relationships.

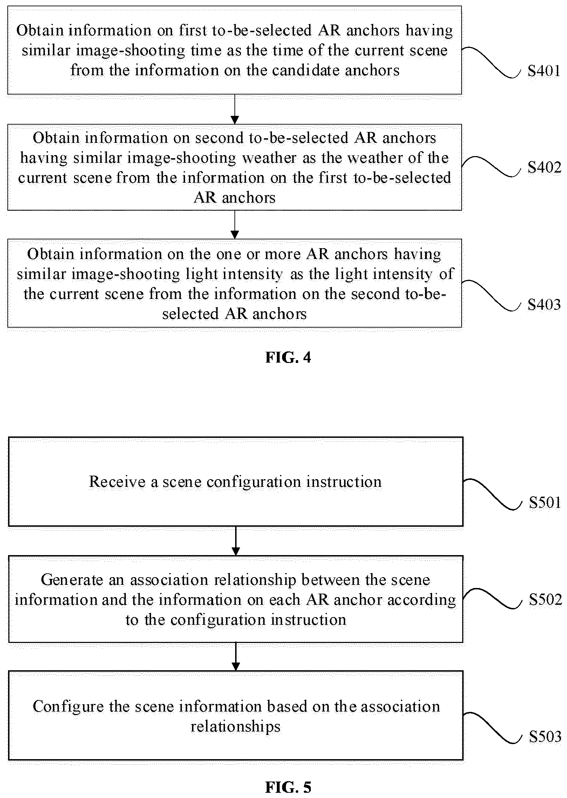

In another example, the scheme for constructing the above-mentioned association relationships may make reference to the example illustrated in FIG. 5, which is not be described in detail here.

At step S103, information on one or more AR anchors matching the one or more current image-shooting conditions is obtained from the information on the candidate anchors.

The one or more AR anchors, which correspond to the AR anchor information, indicates first image-shooting information of a camera at the time of acquiring a sample image. The first image-shooting information includes space coordinate information and/or attitude information.

In one example, the first image-shooting information may further include at least one of a filter type or a zoom ratio.

In the example, after the information on the candidate anchors associated with the geographic location information is determined, the information on the one or more AR anchors matching the one or more current image-shooting conditions may be obtained from the information on the candidate anchors.

It should be noted that the information on each candidate anchor has one or more corresponding image-shooting conditions, such as the time, the weather or the light intensity at the time of image-shooting.

For example, after the information on multiple candidate anchors associated with the geographic location information is determined, the information on the one or more AR anchors having similar image-shooting conditions as the current image-shooting conditions, e.g., having the similar image-shooting time, the similar image-shooting weather, the similar image-shooting light intensity or the like, may be obtained from the information on the candidate anchors.

In another example, the approaches of obtaining the information on the one or more AR anchors having similar image-shooting conditions as the current image-shooting conditions from the information on the candidate anchors may make reference to the examples illustrated in FIG. 2, FIG. 3, or FIG. 4, which are not described in detail here.

According to the above description about the example, through receiving the request for obtaining the AR anchor information, determining the information on the candidate anchors associated with the geographic location information and obtaining the information on the one or more AR anchors matching the one or more current image-shooting conditions from the information on the candidate anchors, it can provide an accurate reference for the terminal to subsequently display the one or more AR anchors in its viewfinder frame in accordance with the information on the one or more AR anchors returned by the server-side in response to the request. Thus, the terminal can perform an image acquisition based on the first image-shooting information indicated by the one or more AR anchors, which helps a user to obtain images with more aesthetic meanings and meets a user's requirement of obtaining high-quality images.

FIG. 2 illustrates a flowchart of obtaining information on one or more AR anchors matching one or more current image-shooting conditions from information on candidate anchors according to an example. The example, on the basis of the above example, illustrates how to obtain the information on the one or more AR anchors matching the one or more current image-shooting conditions from the information on the candidate anchors. In the example, the one or more current image-shooting conditions include the time and the weather of the current scene. Thereafter, as illustrated in FIG. 2, obtaining the information on the one or more AR anchors matching the one or more current image-shooting conditions from the information on the candidate anchors in step S 103 may include the steps S201-S202.

At step S201, information on to-be-selected AR anchors having similar image-shooting time as the time of the current scene is obtained from the information on the candidate anchors.

In the example, after the information on the candidate anchors associated with the geographic location information is determined, the information on the to-be-selected AR anchors having the similar image-shooting time as the time of the current scene may be obtained from the information on the candidate anchors.

For example, after determining the information on the candidate anchors associated with the geographic location information, the image-shooting time in the information on each candidate anchor may be learned, and thus the information on the to-be-selected AR anchors having the similar image-shooting time as the time of the current scene may be obtained from the information on the candidate anchors.

In one example, the above image-shooting time may include various time periods in a day, or may include various seasons or dates in a year, which is not limited by the example.

At step S202, the information on the one or more AR anchors having similar image-shooting weather as the weather of the current scene is obtained from the information on the to-be-selected AR anchors.

In the example, after the information on the to-be-selected AR anchors having similar image-shooting time as the time of the current scene is obtained from the information on the candidate anchors, the information on the one or more AR anchors having similar image-shooting weather as the weather of the current scene may be obtained from the information on the to-be-selected AR anchors.

For example, after obtaining the information on the to-be-selected AR anchors having similar image-shooting time as the time of the current scene, the image-shooting weather in the information on each to-be-selected anchor may be learned, and thus the information on the one or more AR anchors having the similar image-shooting weather as the weather of the current scene may be obtained from the to-be-selected anchors.

According to the above description about the example, through obtaining the information on the to-be-selected AR anchors having similar image-shooting time as the time of the current scene from the information on the candidate anchors, and obtaining the information on the one or more AR anchors having similar image-shooting weather as the weather of the current scene from the information on the to-be-selected AR anchors, the information on the one or more AR anchors having similar image-shooting weather as the weather of the current scene is obtained. Therefore, since various weathers such as a sunny weather, a snowy weather, a rainy weather, etc. have obvious impacts during shooting an image, it can be better achieved that the terminal performs the subsequent image acquisition based on the image-shooting information indicated by the one or more AR anchors, which helps to obtain images with more aesthetic meanings and meets a user's requirement of obtaining high-quality images.

FIG. 3 illustrates a flowchart of obtaining information on one or more AR anchors matching one or more current image-shooting conditions from information on candidate anchors according to an example. The example, on the basis of the above example, illustrates how to obtain the information on the one or more AR anchors matching the one or more current image-shooting conditions from the information on the candidate anchors. In the example, the one or more current image-shooting conditions include the time and the light intensity of the current scene. Thereafter, as illustrated in FIG. 3, obtaining the information on the one or more AR anchors matching the one or more current image-shooting conditions from the information on the candidate anchors in step S103 may include the steps S301-S302.

At step S301, information on to-be-selected AR anchors having similar image-shooting time as the time of the current scene is obtained from the information on the candidate anchors.

The relevant explanation and description of step S301 may make reference to the previous example, which will not be repeated here.

At step S302, the information on the one or more AR anchors having similar image-shooting light intensity as the light intensity of the current scene is obtained from the information on the to-be-selected AR anchors.

In the example, after the information on the to-be-selected AR anchors having similar image-shooting time as the time of the current scene is obtained from the information on the candidate anchors, the information on the one or more AR anchors having similar image-shooting light intensity as the light intensity of the current scene may be obtained from the information on the to-be-selected AR anchors.

For example, after obtaining the information on the to-be-selected AR anchors having similar image-shooting time as the time of the current scene, the image-shooting light intensity in the information on each to-be-selected anchor may be learned, and thus the information on the one or more AR anchors having the similar image-shooting light intensity as the light intensity of the current scene may be obtained from the to-be-selected anchors.

According to the above description about the example, through obtaining the information on the to-be-selected AR anchors having similar image-shooting time as the time of the current scene from the information on the candidate anchors, and obtaining the information on the one or more AR anchors having similar image-shooting light intensity as the light intensity of the current scene from the information on the to-be-selected AR anchors, the information on the one or more AR anchors having similar image-shooting light intensity as the light intensity of the current scene is obtained. Therefore, since various light intensities have obvious impacts during shooting an image, it can be better achieved that the terminal performs the subsequent image acquisition based on the image-shooting information indicated by the one or more AR anchors, which helps to obtain images with more aesthetic meanings and meets a user's requirement of obtaining high-quality images.

FIG. 4 illustrates a flowchart of obtaining information on one or more AR anchors matching one or more current image-shooting conditions from information on candidate anchors according to an example. The example, on the basis of the above example, illustrates how to obtain the information on the one or more AR anchors matching the one or more current image-shooting conditions from the information on the candidate anchors. In the example, the one or more current image-shooting conditions include the time, the weather and the light intensity of the current scene. Thereafter, as illustrated in FIG. 4, obtaining the information on the one or more AR anchors matching the one or more current image-shooting conditions from the information on the candidate anchors in step S103 may include the steps S401-S402.

At step S301, information on first to-be-selected AR anchors having similar image-shooting time as the time of the current scene is obtained from the information on the candidate anchors.

At step S302, information on second to-be-selected AR anchors having similar image-shooting weather as the weather of the current scene is obtained from the information on the first to-be-selected AR anchors.

At step S303, the information on the one or more AR anchors having similar image-shooting light intensity as the light intensity of the current scene is obtained from the information on the second to-be-selected AR anchors.

In the example, after the information on the first to-be-selected AR anchors having similar image-shooting time as the time of the current scene is obtained from the information on the candidate anchors, the information on the second to-be-selected AR anchors having similar image-shooting weather as the weather of the current scene may be obtained from the information on the first to-be-selected AR anchors, and then the information on the one or more AR anchors having similar image-shooting light intensity as the light intensity of the current scene may be obtained from the information on the second to-be-selected AR anchors.

For example, after obtaining the information on the to-be-selected AR anchors having similar image-shooting time as the time of the current scene, the image-shooting weather and the image-shooting light intensity of the information on each to-be-selected anchor may be learned, and thus the information on the one or more AR anchors having the similar image-shooting weather and light intensity as these of the current scene may be obtained from these to-be-selected anchors.

The relevant explanations and descriptions of steps S301-S303 may make reference to the previous example, which will not be repeated here.

According to the above description about the example, through obtaining the information on the first to-be-selected AR anchors having similar image-shooting time as the time of the current scene from the information on the candidate anchors, obtaining the information on the second to-be-selected AR anchors having similar image-shooting weather as the weather of the current scene from the information on the first to-be-selected AR anchors, and obtaining the information on the one or more AR anchors having similar image-shooting light intensity as the light intensity of the current scene from the information on the second to-be-selected AR anchors, the information on the one or more AR anchors having similar image-shooting weather and light intensity as these of the current scene is obtained. Therefore, since either various weathers or various light intensities have obvious impacts during shooting an image, it can be better achieved that the terminal performs the subsequent image acquisition based on the image-shooting information indicated by the one or more AR anchors, which helps to obtain images with more aesthetic meanings and meets a user's requirement of obtaining high-quality images.

FIG. 5 illustrates a flowchart of configuring scene information according to an example. The example, on the basis of the above example, illustrates how to configure the scene information. As illustrated in FIG. 5, the method in the example may further include steps 5601-5603 to configure the scene information.

At step S501, a scene configuration instruction is received.

The configuration instruction is used to configure the scene information for obtaining the information on the one or more AR anchors.

In the example, when configuring the scene information through the terminal for obtaining the one or more AR anchors, a user may trigger and generate the scene configuration instruction via a configuration interface displayed in a user interface, so that the terminal may receive the scene configuration instruction.

At step S502, an association relationship between the scene information and the information on each AR anchor is generated according to the configuration instruction.

In the example, after receiving the scene configuration instruction, the terminal may generate the association relationship between the scene information and the information on each AR anchor according to the configuration instruction.

For example, an association table may be constructed for the scene information specified by the terminal or the scene information on a scene in which the terminal is currently located. Then, AR anchors may be generated at specified positions in the scene, and the information on the AR anchors may be added to the association table of the scene information, so as to subsequently obtain the information on the one or more AR anchors from the table.

At step S503, the scene information is configured based on the association relationships.

In the example, after the association relationship between the scene information and the information on each AR anchor is generated according to the configuration instruction, the scene information may be configured based on the association relationships.

According to the above description about the example, through receiving the scene configuration instruction, generating an association relationship between the scene information and the information on each AR anchor according to the configuration instruction, and then configuring the scene information based on the association relationships, it can lay a foundation for subsequently sending the request for obtaining the AR anchor information to the server-side based on the scene information, and thus achieve to receiving the information on the one or more AR anchors returned by the server-side in response to the request, so as to facilitate the subsequent improvement of the quality of the obtained image information, which can meet a user's requirement of obtaining high-quality images.

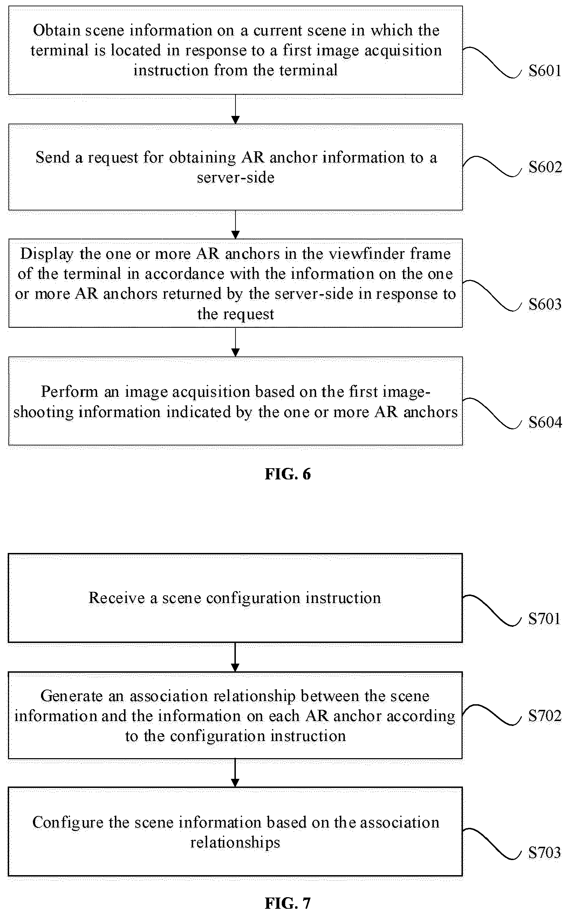

FIG. 6 illustrates a flowchart of an image acquisition method according to an example. In the example, the image acquisition apparatus may be applied to a terminal (for example, an intelligent phone, an intelligent camera, a tablet computer, a wearable device, etc.). As illustrated in FIG 6, the method may include steps S601-S604.

At step S601, scene information on a current scene in which the terminal is located is obtained in response to a first image acquisition instruction from the terminal.

For example, when shooting an image through a terminal, a user may trigger an operation for starting a camera application in the terminal, so that in response to the first image acquisition instruction from the terminal, the terminal can obtain the scene information on the current scene in which the terminal is located.

The scene information may include information on a geographic location in which the terminal is located and one or more current image-shooting conditions (for example, time, weather, or light intensity, etc.).

As an example, the terminal may obtain the geographic location information of the terminal through a GPS module built in the terminal.

It should be noted that, besides through the GPS module built in the terminal, the geographic location information of the terminal may be obtained by a developer or a user in other ways according to actual service requirements, and the obtained results are also applicable to subsequent steps. The example is not intended to limit these ways.

As another example, the current time may be obtained through a built-in processor, the light intensity of the current scene may be obtained through a built-in sensor, and the weather of the current scene may be obtained through a weather application.

At step S602, a request for obtaining AR anchor information is sent to a server-side.

One or more AR anchors corresponding to the AR anchor information indicate first image-shooting information of a camera at the time of acquiring a sample image. The first image-shooting information includes space coordinate information and/or attitude information, for example, the space coordinate information and/or the attitude information of a camera adopted previously by another user for acquiring the sample image in the same place. The attitude information may include, for example, an image-shooting direction of the camera. In one example, the first image-shooting information may further include at least one of a filter type or a zoom ratio.

For example, the content of the AR anchor may be set by a developer or a user based on actual requirements, e.g., at least one of a cloud anchor, a photo, text description, or a graphic tag, which is not limited by the example.

In one example, the content of the information on the AR anchor may include identification information of the AR anchor, such as an identifier or a reference number, which is not limited by the example.

In the example, after the scene information on the current scene in which the terminal is located is obtained, the request for acquiring the AR anchor information may be sent to the server-side. The request includes the scene information.

For example, in response to the first image acquisition instruction, the terminal may send the request for acquiring the AR anchor information to the server-side based on the obtained scene information on the current scene.

In one example, the scene information may further include at least one of data streams of a viewfinder frame.

Thereafter, the information on the AR anchor includes:
at least one of: a displaying form of the AR anchor, an identifier of an application package to be switched, coordinates of the AR anchor displayed in the viewfinder frame, a prompting way, or a way of displaying a reminder of image acquisition.

The displaying form of the AR anchor may include a brief introduction, a picture or a video of a stated content, a model of a stated person/object, or the like.

The identifier of the application package to be switched may include an AR map or the like. For example, after seeing the AR anchor involved by a target scenery on the terminal, the user may trigger and switch to the AR map if he is interested in the relevant information (such as a historical background, a personage's introduction, etc.) of the target scenery, so as to learn the information of interest.

The coordinates of the AR anchor displayed in the viewfinder frame may include the coordinates of the AR anchor in a coordinate system corresponding to a camera interface.

The prompting way may include a prompting form for the AR anchor in the camera interface, such as a prompt tab that may be clicked by the user, which is not limited by the example.

At step S603, the one or more AR anchors are displayed in the viewfinder frame of the terminal in accordance with the information on the one or more AR anchors returned by the server-side in response to the request.

In the example, after the scene information on the current scene in which the terminal is located is obtained and the request for obtaining the AR anchor information is sent to the server-side, the one or more AR anchors may be displayed in the viewfinder frame of the terminal in accordance with the information on the one or more AR anchors.

For example, after the scene information on the current scene in which the terminal is located is obtained and the request for obtaining the AR anchor information is sent to the server-side, the one or more AR anchors corresponding to the AR anchor information may be determined, and then the one or more AR anchors may be displayed in the viewfinder frame of the terminal based on an augmented reality technology.

It should be noted that there may be one or more sceneries in the viewfinder frame of the terminal, and thus there may be different AR anchors for each scenery. The AR anchors indicate the image-shooting information of the camera at the time of acquiring a sample image of the corresponding scenery.

It should be noted that the schemes of displaying the one or more AR anchors in the viewfinder frame of the terminal based on the augmented reality technology may make reference to the related arts, which is not limited by the example.

At step S604, an image acquisition is performed based on the first image-shooting information indicated by the one or more AR anchors.

In the example, after the one or more AR anchors are displayed in the viewfinder frame of the terminal in accordance with the information on the one or more AR anchors returned by the server-side in response to the request, the image acquisition may be performed based on the first image-shooting information indicated by the one or more AR anchors.

For example, after the one or more AR anchors are displayed in the viewfinder frame of the terminal, the user may adjust the image-shooting information of the terminal based on the one or more AR anchors, such as the space coordinate information and/or the attitude information of the terminal, so as to acquire image information in the current viewfinder frame after adjusting the image-shooting information.

In one example, the one or more AR anchors may outline an AR viewfinder indication box. The AR viewfinder indication box may frame a sample image corresponding to the one or more AR anchors. Thereafter, in response to detecting that the viewfinder frame matches the AR viewfinder indication box, the terminal may initiate a camera of the terminal to perform the image acquisition.

For example, based on the displayed one or more AR anchors, it may prompt the user to adjust the image-shooting information of the terminal, such as the space coordinate information and/or the attitude information of the terminal, so as to make the viewfinder frame of the terminal coincident with the AR viewfinder instruction box, thereby initiating the camera of the terminal to perform the image acquisition.

According to the above description about the example, through obtaining the scene information on the current scene in which the terminal is located in response to the first image acquisition instruction from the terminal, sending the request for obtaining the AR anchor information to the server-side, then displaying the one or more AR anchors in the viewfinder frame of the terminal in accordance with the information on the one or more AR anchors returned by the server-side in response to the request, and thus performing the image acquisition based on the first image-shooting information indicated by the one or more AR anchors, the one or more AR anchors are displayed for the user when the user shoots an image, so as to assist the user to perform the image acquisition based on the first image-shooting information indicated by the one or more AR anchors, which help the user to obtain images with more aesthetic meanings and meets a user's requirement of obtaining high-quality images.

FIG. 7 illustrates a flowchart of configuring scene information according to an example. The example, on the basis of the above example, illustrates how to configure the scene information. As illustrated in FIG. 7, the method in the example may further include steps S701-S703 to configure the scene information.

At step S701, a scene configuration instruction is received.

The configuration instruction is used to configure the scene information for obtaining the information on the one or more AR anchors.

In the example, when configuring the scene information through the terminal for obtaining the one or more AR anchors, a user may trigger and generate the scene configuration instruction via a configuration interface displayed in a user interface, so that the terminal may receive the scene configuration instruction.

At step S702, an association relationship between the scene information and the information on each AR anchor is generated according to the configuration instruction.

In the example, after receiving the scene configuration instruction, the terminal may generate the association relationship between the scene information and the information on each AR anchor.

For example, an association table may be constructed for the scene information specified by the terminal or the scene information on a scene in which the terminal is currently located. Then, AR anchors may be generated at the specified positions in the scene, and the information on the AR anchors may be added to the association table of the scene information, so as to subsequently obtain the information on the one or more AR anchors from the table.

At step S703, the scene information is configured based on the association relationships.

In the example, after the association relationship between the scene information and the information on each AR anchor is generated according to the configuration instruction, the scene information may be configured based on the association relationships.

According to the above description about the example, through receiving the scene configuration instruction, generating the association relationship between the scene information and the information on each AR anchor according to the configuration instruction, and then configuring the scene information based on the association relationships, it can lay a foundation for subsequently sending the request for obtaining the AR anchor information to the server-side based on the scene information, and thus achieve to receiving the information on the one or more AR anchors returned by the server-side in response to the request, so as to facilitate the subsequent improvement of the quality of the obtained image information, which can meet a user's requirement of obtaining high-quality images.

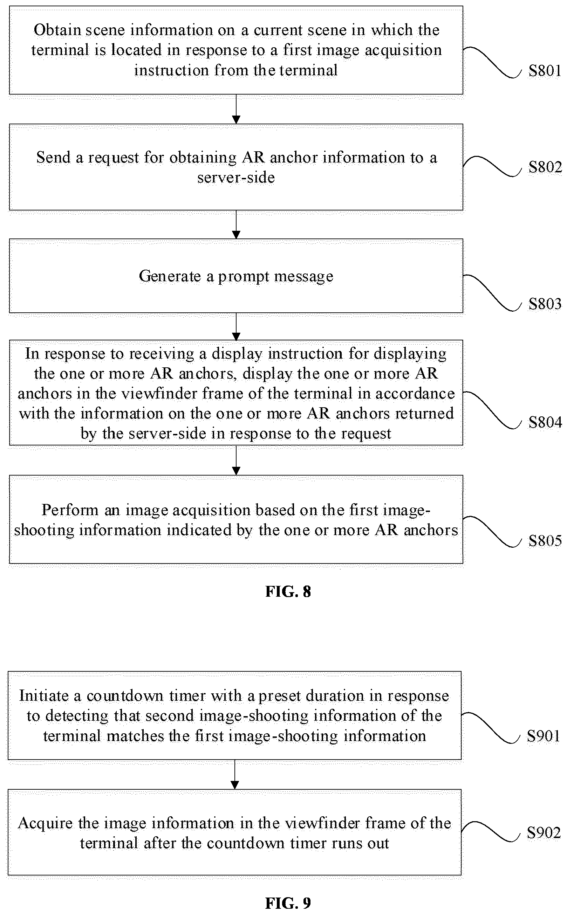

FIG. 8 illustrates a flowchart of an image acquisition method according to another example. In the example, the image acquisition apparatus may be applied to a terminal (for example, an intelligent phone, an intelligent camera, a tablet computer, a wearable device, etc.). As illustrated in FIG 8, the method includes steps S801-S805.

At step S801, scene information on a current scene in which the terminal is located is obtained in response to a first image acquisition instruction from the terminal. The scene information includes geographic location information and one or more current image-shooting conditions.

At step S802, a request for obtaining AR anchor information is sent to a server-side. The request includes the scene information. One or more AR anchors corresponding to the AR anchor information indicate first image-shooting information of the camera at the time of acquiring a sample image. The first image-shooting information includes space coordinate information and/or attitude information.

At step S803, a prompt message is generated.

The prompt message is configured to inquire whether to display the one or more AR anchors.

In the example, after obtaining the scene information on the current scene in which the terminal is located and sending the request for obtaining the AR anchor information to the server-side, in order to determine whether the user expects to display the one or more AR anchors, it may generate the prompt message, so as to inquire the user whether to display the one or more obtained AR anchors through the prompt message.

It should be noted that the content and form of the prompt message may be freely set by a developer based on actual requirements, like being set to at least one of a sound, a vibration, or a virtual key, which is not limited by the example.

At step S804, in response to receiving a display instruction for displaying the one or more AR anchors, the one or more AR anchors are displayed in the viewfinder frame of the terminal in accordance with the information on the one or more AR anchors returned by the server-side in response to the request.

In the example, after generating the prompt message for inquiring whether to display the one or more AR anchors, the terminal may display the one or more AR anchors in the viewfinder frame of the terminal in accordance with the information on the one or more AR anchors when the terminal receives the display instruction for displaying the one or more AR anchors.

At step S805, an image acquisition is performed based on the first image-shooting information indicated by the one or more AR anchors.

The relevant explanations and descriptions of steps S801 and S802-S805 may make reference to the previous example, which will not be repeated here.

According to the above description about the example, through obtaining the scene information on the current scene in which the terminal is located in response to the first image acquisition instruction from the terminal, sending the request for obtaining the AR anchor information to the server-side, generating the prompt message, displaying the one or more AR anchors in the viewfinder frame of the terminal in accordance with the information on the one or more AR anchors returned by the server-side in response to the request in response to receiving the display instruction for displaying the one or more AR anchors, and then performing the image acquisition based on the first image-shooting information indicated by the one or more AR anchors, the one or more AR anchors are displayed for the user in response to the display instruction from the user, so as to assist the user to perform the image acquisition based on the first image-shooting information indicated by the one or more AR anchors, which helps the user to obtain images with more aesthetic meanings and meets a user's requirement of obtaining high-quality images.

FIG. 9 illustrates a flowchart of performing an image acquisition based on first image-shooting information indicated by one or more AR anchors according to an example. The example, on the basis of the above example, illustrates how to perform the image acquisition based on the first image-shooting information indicated by the or more AR anchors.

As illustrated in FIG. 9, performing the image acquisition based on the first image-shooting information indicated by the one or more AR anchors in step S604 may include steps S901-S902.

At step S901, a countdown timer with a preset duration is initiated in response to detecting that second image-shooting information of the terminal matches the first image-shooting information.

The second image-shooting information includes space coordinate information and/or attitude information of the camera of the terminal.

In the example, after displaying the one or more AR anchors in the viewfinder frame of the terminal in accordance with the information on the one or more AR anchors returned by the server-side in response to the request, the user may adjust the second image-shooting information of the terminal to make the second image-shooting information matched with the first image-shooting information, and then the terminal may initiate the countdown timer with the preset duration in response to detecting that the second image-shooting information of the terminal matches the first image-shooting information, such as a countdown progress bar for 3 seconds, which is not limited by the example.

At step S902, the image information in the viewfinder frame of the terminal is acquired after the countdown timer runs out.

In the example, after the countdown timer with the set duration is initiated, the image information in the viewfinder frame of the terminal may be acquired in response to detecting that the countdown timer runs out.

According to the above description about the example, through initiating the countdown timer with the preset duration in response to detecting that the second image-shooting information of the terminal matches the first image-shooting information, and acquiring the image information in the viewfinder frame of the terminal after the countdown timer runs out, the image acquisition can be performed automatically based on the matching between the second image-shooting information and the first image-shooting information and the setting of the countdown timer, instead of manually triggering an image acquisition button by the user. Thus, it can avoid that the adjusted second image-shooting information changes as clicking the button, so as to better assist the user to perform the image acquisition based on the first image-shooting information indicated by the one or more AR anchors, which helps the user to obtain images with more aesthetic meanings and meets a user's requirement of obtaining high-quality images.

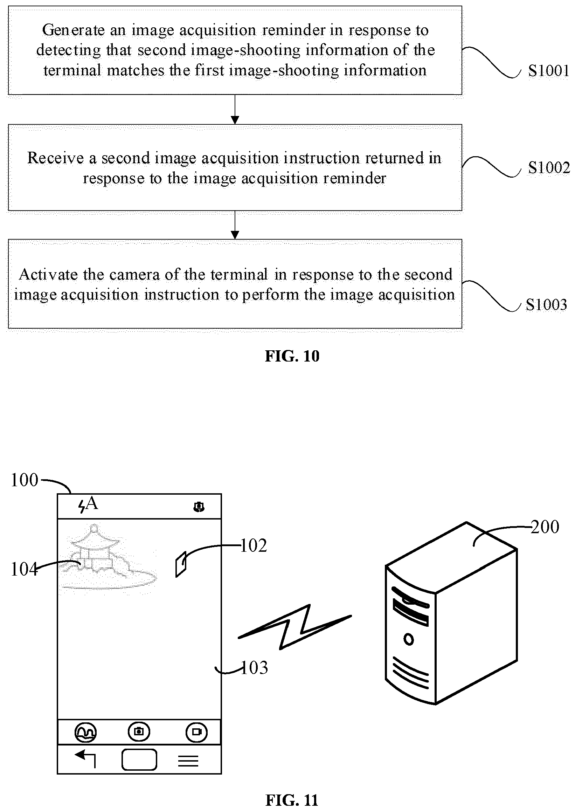

FIG. 10 illustrates a flowchart of performing an image acquisition based on first image-shooting information indicated by one or more AR anchors according to another example. The example, on the basis of the above example, illustrates how to perform the image acquisition based on the first image-shooting information indicated by the one or more AR anchors.

As illustrated in FIG. 10, performing the image acquisition based on the first image-shooting information indicated by the one or more AR anchors in step S604 may include steps S1001-S1003.

At step S1001, an image acquisition reminder is generated in response to detecting that second image-shooting information of the terminal matches the first image-shooting information.

The second image-shooting information includes space coordinate information and/or attitude information of the camera of the terminal.

In the example, after the one or more AR anchors are displayed in the viewfinder frame of the terminal in accordance with the information on the one or more AR anchors returned by the server-side in response to the request, the user may adjust the second image-shooting information of the terminal to make the second image-shooting information matched with the first image-shooting information, and then generate, in response to detecting that the second image-shooting information of the terminal matches the first image-shooting information, the image acquisition reminder, like at least one of a sound, a vibration, a highlighted image-shooting key, or an image-shooting key shown at a preset position, which is not limited by the example.

At step S 1002, a second image acquisition instruction returned in response to the image acquisition reminder is received.

In the example, after the image acquisition reminder is generated in response to detecting that the second image-shooting information of the terminal matches the first image-shooting information, the second image acquisition instruction returned in response to the image acquisition reminder may be received.

For example, after the terminal generates the image acquisition reminder, the user may return the second image acquisition instruction in response to the image acquisition reminder, so that the terminal can receive the second image acquisition instruction.

At step S 1003, the camera of the terminal is activated in response to the second image acquisition instruction to perform the image acquisition.

In the example, after the terminal receives the second image acquisition instruction returned in response to the image acquisition reminder, the camera of the terminal may be activated in response to the second image acquisition instruction to perform the image acquisition.

For example, after the image acquisition reminder is generated, the camera of the terminal may be activated to perform the image acquisition when the second image acquisition instruction returned by the user in response to the image acquisition reminder is received.

According to the above description about the example, through generating the image acquisition reminder in response to detecting that the second image-shooting information of the terminal matches the first image-shooting information, receiving the second image acquisition instruction returned in response to the image acquisition reminder, and then initiating the camera of the terminal in response to the second image acquisition instruction to perform the image acquisition, the image acquisition can be implemented based on the matching between the second image-shooting information and the first image-shooting information as well as the second image acquisition instruction returned by the user in response to the image acquisition reminder. Therefore, the image acquisition can be performed based on the user's requirements, so as to better assist the user to perform the image acquisition based on the first image-shooting information indicated by the one or more AR anchors, which helps the user to obtain images with more aesthetic meanings and meets a user's requirement of obtaining high-quality images.

FIG. 11 illustrates a schematic diagram of applying an image acquisition method according to an example. As illustrated in FIG. 11, when receiving a first image acquisition instruction, the terminal 100 may obtain scene information on a current scene in which the terminal is located in response to the first image acquisition instruction, and send a request for obtaining AR anchor information to a server-side 200. One or more AR anchors corresponding to the AR anchor information indicate first image-shooting information of a camera at the time of acquiring a sample image. The first image-shooting information includes space coordinate information and/or attitude information. The request includes the scene information. Further, the one or more AR anchors may be displayed in a viewfinder frame 103 of the terminal 100 in accordance with information on the one or more AR anchors returned by the server-side 200 based on the request. In the example, the one or more AR anchors may outline an AR viewfinder indication box 102, and thus the terminal may initiate, in response to detecting that the viewfinder frame 103 matches the AR viewfinder indication box 102, a camera of the terminal 100 to acquire one or more images of an object scenery 104.

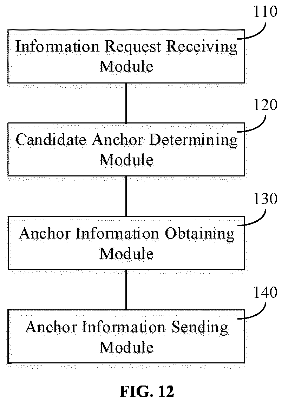

FIG. 12 illustrates a block diagram of an anchor information processing apparatus according to an example. In the example, the anchor information processing apparatus may be applied to a server-side (for example, a server or a server cluster composed of a plurality of servers). As illustrated in FIG. 12, the apparatus includes: an information request receiving module 110, a candidate anchor determining module 120, and an anchor information obtaining module 130.

The information request receiving module 110 is configured to receive a request for obtaining AR anchor information. The request includes scene information on a current scene in which a terminal is located, and the scene information includes geographic location information and one or more current image-shooting conditions.

The candidate anchor determining module 120 is configured to determine information on candidate anchors associated with the geographic location information.

The anchor information obtaining module 130 is configured to obtain, from the information on the candidate anchors, information on one or more AR anchors matching the one or more current image-shooting conditions. The one or more AR anchors corresponding to the AR anchor information indicate first image-shooting information of a camera at the time of acquiring a sample image, and the first image-shooting information includes space coordinate information and/or attitude information.

In one example, the first image-shooting information further includes at least one of a filter type or a zoom ratio.

According to the above description about the example, through receiving the request for obtaining the AR anchor information, then determining the information on the candidate anchors associated with the geographic location information and obtaining the information on the one or more AR anchors matching the one or more current image-shooting conditions from the information on the candidate anchors, it is achieved that the one or more AR anchors corresponding to the AR anchor information indicate first image-shooting information of a camera at the time of acquiring a sample image. Since the information on the candidate anchors associated with the geographic location information is determined first and then the information on the one or more AR anchors matching the one or more current image-shooting conditions is obtained from the information on the candidate anchors, the information on the one or more AR anchors matching the current scene in which the terminal is located is determined more accurately, so as to provide an accurate reference for the terminal to subsequently display the one or more AR anchors in a viewfinder frame in accordance with the information on the one or more AR anchors. Thus, the terminal can perform an image acquisition based on the first image-shooting information indicated by the one or more AR anchors, which helps a user to obtain images with more aesthetic meanings and meets a user's requirement of obtaining high-quality images.

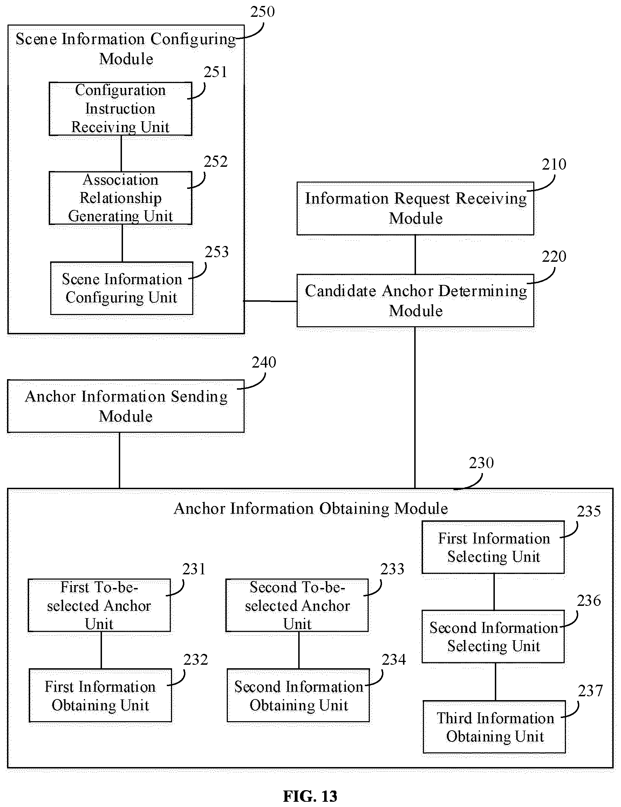

FIG. 13 illustrates a block diagram of an anchor information processing apparatus according to another example. In the example, the anchor information processing apparatus may be applied to a server-side (for example, a server or a server cluster composed of a plurality of servers). An information request receiving module 210, a candidate anchor determining module 220, and an anchor information obtaining module 230 have the same functions as the information request receiving module 110, the candidate anchor determining module 120, and the anchor information obtaining module 130 in the example illustrated in FIG. 12, respectively, and are not repeated here.

In the example, the one or more current image-shooting conditions include at least one of: time, weather, or light intensity of the current scene. In one example, when the current image-shooting conditions include the time and the weather of the current scene, the anchor information obtaining module 230 may include:
a first to-be-selected anchor unit 231 that is configured to obtain, from the information on the candidate anchors, information on to-be-selected AR anchors having similar image-shooting time as the time of the current scene; and
a first information obtaining unit 232 that is configured to obtain, from the information on the to-be-selected AR anchors, the information on the one or more AR anchors having similar image-shooting weather as the weather of the current scene.

In another example, when the current image-shooting conditions include the time and the light intensity of the current scene, the anchor information obtaining module 230 may include:
a second to-be-selected anchor unit 233 that is configured for subsequent anchor obtaining units and configured to obtain, from the information on the candidate anchors, information on to-be-selected AR anchors having similar image-shooting time as the time of the current scene; and
a second information obtaining unit 234 that is configured to obtain, from the information on the to-be-selected AR anchors, the information on the one or more AR anchors having similar image-shooting light intensity as the light intensity of the current scene.

In another example, when the current image-shooting conditions include the time, the weather and the light intensity of the current scene, the anchor information obtaining module 233 may include:
a first information selecting unit 235 that is configured to obtain, from the information on the candidate anchors, information on first to-be-selected AR anchors having similar image-shooting time as the time of the current scene;
a second information selecting unit 236 that is configured to obtain, from the information on the first to-be-selected AR anchors, information on second to-be-selected AR anchors having similar image-shooting weather as the weather of the current scene; and
a third information obtaining unit 237 that is configured to obtain, from the information on the second to-be-selected AR anchors, the information on the one or more AR anchors having similar image-shooting light intensity as the light intensity of the current scene.

In one example, the apparatus may further include a scene information configuring module 250.

The scene information configuring module 250 may include:
a configuration instruction receiving unit 251 that is configured to receive a scene configuration instruction, where the configuration instruction is used to configure the scene information for obtaining the information on the one or more AR anchors;
an association relationship generating unit 252 that is configured to generate an association relationship between the scene information and the information on each AR anchor according to the configuration instruction; and
a scene information configuring unit 253 that is configured to configure the scene information based on the association relationships.

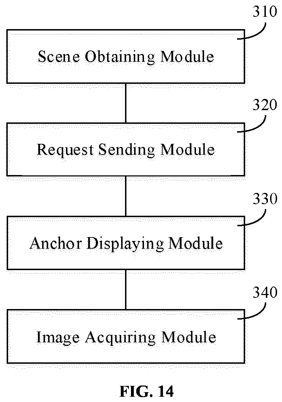

FIG. 14 illustrates a block diagram of an image acquisition apparatus according to an example. In the example, the image acquisition apparatus may be applied to a terminal (for example, an intelligent phone, an intelligent camera, a tablet computer, a wearable device, etc.). As illustrated in FIG. 14, the apparatus includes: a scene obtaining module 310, a request sending module 320, an anchor displaying module 330, and an image acquiring module 340.

The scene obtaining module 310 is configured to obtain, in response to a first image acquisition instruction from the terminal, scene information on a current scene in which the terminal is located. The scene information includes geographic location information and one or more current image-shooting conditions.

The request sending module 320 is configured to send a request for obtaining AR anchor information to a server-side. The request includes the scene information. One or more AR anchors corresponding to the AR anchor information indicate first image-shooting information of a camera at the time of acquiring a sample image, and the first image-shooting information includes space coordinate information and/or attitude information.

The anchor displaying module 330 is configured to display the one or more AR anchors in a viewfinder frame of the terminal in accordance with the information on the one or more AR anchors returned by the server-side in response to the request.

The image acquiring module 340 is configured to perform an image acquisition based on the first image-shooting information indicated by the one or more AR anchors.

In one example, the first image-shooting information further includes at least one of a filter type or a zoom ratio.

According to the above technical solution of the example, through obtaining, in response to the first image acquisition instruction from the terminal, the scene information on the current scene in which the terminal is located, sending the request for obtaining the AR anchor information to the server-side, sending the request for obtaining the AR anchor information to the server-side, displaying the one or more AR anchors in the viewfinder frame of the terminal in accordance with the information on the one or more AR anchors returned by the server-side in response to the request, and then performing the image acquisition based on the first image-shooting information indicated by the one or more AR anchors, the one or more AR anchors are displayed for the user when the user shoots an image. Thus, it can assist the user to perform the image acquisition based on the first shooting information indicated by the one or more AR anchors, which helps the user to obtain images with more aesthetic meanings and meets a user's requirement of obtaining high-quality images.

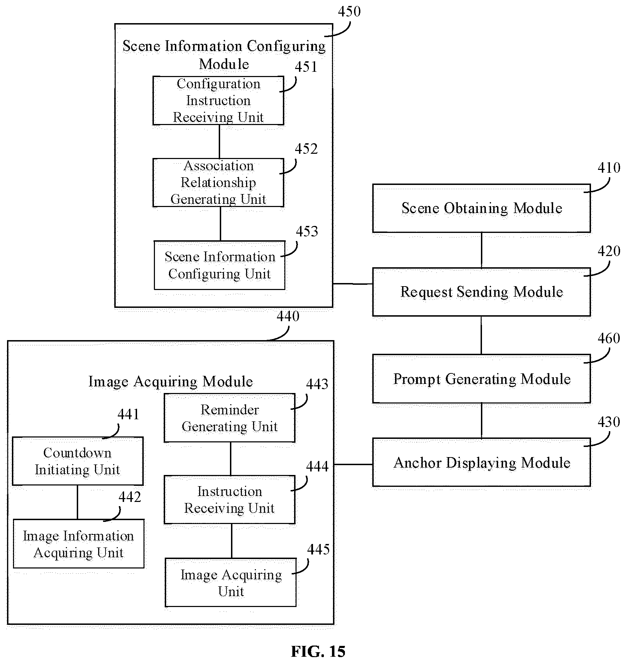

FIG. 15 illustrates a block diagram of another image acquiring apparatus according to an example. In the example, the image acquiring apparatus may be applied to a terminal (for example, an intelligent phone, an intelligent camera, a tablet computer, a wearable device, etc.). A scene obtaining module 410, a request sending module 420, an anchor displaying module 430, and an image acquiring module 440 have the same functions as the scene obtaining module 310, the request sending module 320, the anchor displaying module 330, and the image acquiring module 340 in the example illustrated in FIG. 14, respectively, and are not repeated here.

In the example, the one or more current image-shooting conditions include at least one of: time, weather, or light intensity of the current scene.

In one example, the scene information further includes at least one of data streams of the viewfinder frame; and
the information on the one or more AR anchors includes at least one of: a displaying form of each AR anchor, an identifier of an application package to be switched, coordinates of each AR anchor displayed in the viewfinder frame, a prompting way, or a way of displaying a reminder of image acquisition.

As illustrated in FIG. 15, the apparatus may further include a scene information configuring module 450.

The scene information configuring module 450 may include:
a configuration instruction receiving unit 451 that is configured to receive a scene configuration instruction, where the configuration instruction is used to configure the scene information for obtaining the information on the one or more AR anchors;
an association relationship generating unit 452 that is configured to generate an association relationship between the scene information and the information on each AR anchor according to the configuration instruction; and
a scene information configuring unit 453 that is configured to configure the scene information based on the association relationships.

In one example, the one or more AR anchors may outline an AR viewfinder indication box.

The image acquiring module 440 is further configured to activate, in response to detecting that the viewfinder frame matches the AR viewfinder indication box, a camera of the terminal to perform the image acquisition.

In one example, the apparatus may further include:
a prompt generating module 460 that is configured to generate a prompt message, where the prompt message is configured to inquire whether to display the one or more AR anchors;

The anchor displaying module 430 is further configured to display, in response to receiving a display instruction for displaying the one or more AR anchors, the one or more AR anchors in the viewfinder frame of the terminal in accordance with the information on the one or more AR anchors returned by the server-side in response to the request.

In one example, the image acquiring module 440 may include:
a countdown initiating unit 441 that is configured to initiate, in response to detecting that second image-shooting information of the terminal matches the first image-shooting information, a countdown timer with a preset duration; and
an image information acquiring unit 442 that is configured to acquire image information in the viewfinder frame of the terminal after the countdown timer runs out.

In another example, the image acquiring module 440 may include:
a reminder generating unit 443 that is configured to generate, in response to detecting that second image-shooting information of the terminal matches the first image-shooting information, an image acquisition reminder;
an instruction receiving unit 444 that is configured to receive a second image acquisition instruction returned in response to the image acquisition reminder; and
an image acquiring unit 445 that is configured to activate, in response to the second image acquisition instruction, a camera of the terminal to perform the image acquisition.

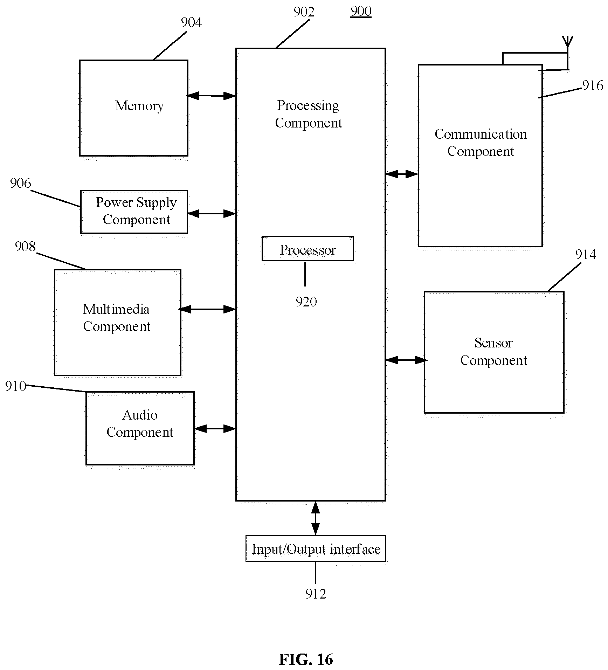

FIG. 16 is a block diagram of an electronic device according to an example. For example, the device 900 may be a mobile phone, a computer, a digital broadcasting terminal, a messaging device, a game console, a tablet device, a medical device, a fitness device, a personal digital assistant, and the like.

Making reference to FIG. 16, the device 900 may include one or more of the following components: a processing component 902, a memory 904, a power supply component 906, a multimedia component 908, an audio component 910, an input/output (I/O) interface 912, a sensor component 914, and a communication component 916.

The processing component 902 generally controls the overall operations of the device 900, such as operations associated with display, phone calls, data communications, camera operations, and recording operations. The processing component 902 may include one or more processors 920 to execute instructions to complete all or a part of the steps of the above methods. In addition, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operations of the device 900. Examples of such data include instructions for any application or method operated on the device 900, contact data, phonebook data, messages, pictures, videos, and the like. The memory 904 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 906 provides power for various components of the device 900. The power supply component 906 may include a power management system, one or more power supplies, and other components associated with generating, managing, and distributing power for the device 900.

The multimedia component 908 includes a screen providing an output interface between the device 900 and a user. In some examples, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a lasting time and a pressure associated with the touch or swipe. In some examples, the multimedia component 908 includes a front camera and/or a rear camera. The front camera and/or rear camera may receive external multimedia data when the device 900 is in an operating mode, such as a photographing mode or a video mode. Each front camera and rear camera may be a fixed optical lens system or have focal length and optical zooming capability.

The audio component 910 is configured to output and/or input an audio signal. For example, the audio component 910 includes a microphone (MIC) that is configured to receive an external audio signal when the device 900 is in an operating mode, such as a call mode, a recording mode, and a voice recognition mode. The received audio signal may be further stored in memory 904 or transmitted via communication component 916. In some examples, the audio component 910 also includes a speaker for outputting an audio signal.

The I/O interface 912 provides an interface between the processing component 902 and a peripheral interface module. The above peripheral interface module may be a keyboard, a click wheel, buttons, or the like. These buttons may include but not be limited to a home button, a volume button, a start button and a lock button.

The sensor component 914 includes one or more sensors to provide the device 900 with status assessments in various aspects. For example, the sensor component 914 may detect an open/closed state of the device 900 and a relative positioning of components such as the display and keypad of the device 900, and the sensor component 914 may also detect a change in position of the device 900 or a component of the device 900, the presence or absence of the user contacting with the device 900, orientation or acceleration/deceleration of the device 900, and temperature change of the device 900. The sensor component 914 may include a proximity sensor configured to detect the presence of a nearby object without any physical contact. The sensor component 914 may further include an optical sensor, such as a Complementary Metal-Oxide-Semiconductor (CMOS) or Charged Coupled Device (CCD) image sensor, for being applied in imaging applications. In some examples, the sensor component 914 may also include an acceleration sensor, a gyro sensor, a magnetic sensor, a pressure sensor, or a temperature sensor.

The communication component 916 is configured to facilitate wired or wireless communication between the device 900 and other devices. The device 900 may access a wireless network based on a communication standard, such as WiFi, 2G or 3G, 4G or 5G, or a combination thereof. In one example, the communication component 916 receives broadcast signals or broadcast related information from an external broadcast management system via a broadcast channel. In one example, the communication component 916 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the device 900 may be implemented by one or more application specific integrated circuits (ASIC), digital signal processors (DSP), digital signal processing equipment (DSPD), programmable logic devices (PLD), field programmable gate array (FPGA), controller, microcontroller, microprocessor, or other electronics to perform the foregoing image acquisition methods.

In one or more examples, there is also provided a non-transitory computer-readable storage medium including instructions, such as the memory 904 including instructions. These instructions may be executed by the one or more processors 920 of the device 900 to complete the foregoing image acquisition methods. For example, the non-transitory computer-readable storage medium may be a read-only memory (ROM), a random access memory (RAM), a CD-ROM, a magnetic tape, a floppy disk, an optical data storage device, and the like.

Other implementations of the present invention will be readily apparent to those skilled in the art after implementing the invention by making reference to the specification. The present invention is intended to cover any variations, uses, or adaptations of the present invention that are in accordance with the general principles thereof and include common general knowledge or conventional technical means in the art that are not disclosed in the present invention. The description and the examples are only illustrative, and the true scope and spirit of the present invention are set forth in the appended claims.

It should be understood that the present invention is not limited to the above-described accurate structures illustrated in the drawings, and various modifications and changes can be made to the present invention without departing from the scope thereof. The scope of the present invention is to be limited only by the appended claims.

## Claims

1. An anchor information processing method, comprising:
receiving a request for obtaining augmented reality, AR, anchor information, wherein the request comprises scene information on a current scene in which a terminal is located, and the scene information comprises geographic location information and one or more current image-shooting conditions;
determining information on candidate anchors associated with the geographic location information; and
obtaining, from the information on the candidate anchors, information on one or more AR anchors matching the one or more current image-shooting conditions, wherein the one or more AR anchors corresponding to the AR anchor information indicate first image-shooting information of a camera at the time of acquiring a sample image, and the first image-shooting information comprises at least one of: space coordinate information, or attitude information.

2. The method according to claim 1, wherein the first image-shooting information further comprises at least one of a filter type or a zoom ratio.

3. The method according to claim 1, wherein the one or more current image-shooting conditions comprise at least one of: time, weather, or light intensity of the current scene.

4. The method according to claim 3,
wherein the one or more current image-shooting conditions comprise the time and the weather of the current scene, and
wherein obtaining, from the information on the candidate anchors, the information on the one or more AR anchors matching the one or more current image-shooting conditions comprises:
obtaining, from the information on the candidate anchors, information on to-be-selected AR anchors having similar image-shooting time as the time of the current scene; and
obtaining, from the information on the to-be-selected AR anchors, the information on the one or more AR anchors having similar image-shooting weather as the weather of the current scene.

5. The method according to claim 3,
wherein the one or more current image-shooting conditions comprise the time and the light intensity of the current scene, and
wherein obtaining, from the information on the candidate anchors, the information on the one or more AR anchors matching the one or more current image-shooting conditions comprises:
obtaining, from the information on the candidate anchors, information on to-be-selected AR anchors having similar image-shooting time as the time of the current scene; and
obtaining, from the information on the to-be-selected AR anchors, the information on the one or more AR anchors having similar image-shooting light intensity as the light intensity of the current scene.

6. The method according to claim 3,
wherein the one or more current image-shooting conditions comprise the time, the weather and the light intensity of the current scene, and
wherein obtaining, from the information on the candidate anchors, the information on the one or more AR anchors matching the one or more current image-shooting conditions comprises:
obtaining, from the information on the candidate anchors, information on first to-be-selected AR anchors having similar image-shooting time as the time of the current scene;
obtaining, from the information on the first to-be-selected AR anchors, information on second to-be-selected AR anchors having similar image-shooting weather as the weather of the current scene; and
obtaining, from the information on the second to-be-selected AR anchors, the information on the one or more AR anchors having similar image-shooting light intensity as the light intensity of the current scene.

7. The method according to claim 1, wherein the method further comprises configuring the scene information by:
receiving a scene configuration instruction, wherein the configuration instruction is used to configure the scene information for obtaining the information on the one or more AR anchors;
generating an association relationship between the scene information and the information on each AR anchor according to the configuration instruction; and
configuring the scene information based on the association relationships.

8. An image acquisition method, comprising:
obtaining, in response to a first image acquisition instruction from a terminal, scene information on a current scene in which the terminal is located, wherein the scene information comprises geographic location information and one or more current image-shooting conditions;
sending a request for obtaining augmented reality, AR, anchor information to a server-side, wherein the request comprises the scene information, and wherein one or more AR anchors corresponding to the AR anchor information indicate first image-shooting information of a camera at the time of acquiring a sample image, and the first image-shooting information comprises at least one of: space coordinate information, or attitude information;
displaying the one or more AR anchors in a viewfinder frame of the terminal in accordance with the information on the one or more AR anchors returned by the server-side in response to the request; and
performing an image acquisition based on the first image-shooting information indicated by the one or more AR anchors.

9. The method according to claim 8, wherein the first image-shooting information further comprises at least one of a filter type or a zoom ratio.

10. The method according to claim 8, wherein the one or more current image-shooting conditions comprise at least one of: time, weather, or light intensity of the current scene.

11. The method according to claim 8,
wherein the scene information further comprises at least one of data streams of the viewfinder frame; and
wherein the information on the one or more AR anchors comprises at least one of: a displaying form of each AR anchor, an identifier of an application package to be switched, coordinates of each AR anchor displayed in the viewfinder frame, a prompting way, or a way of displaying a reminder of image acquisition.

12. The method according to claim 8, wherein the method further comprises configuring the scene information by:
receiving a scene configuration instruction, wherein the configuration instruction is used to configure the scene information for obtaining the information on the one or more AR anchors;
generating an association relationship between the scene information and the information on each AR anchor according to the configuration instruction; and
configuring the scene information based on the association relationships.

13. The method according to claim 8,
wherein the one or more AR anchors outline an AR viewfinder indication box; and
wherein performing the image acquisition based on the first image-shooting information indicated by the one or more AR anchors comprises:
activating, in response to detecting that the viewfinder frame matches the AR viewfinder indication box, a camera of the terminal to perform the image acquisition.

14. The method according to claim 8, further comprising:
generating a prompt message, wherein the prompt message is configured to inquire whether to display the one or more AR anchors; and
displaying, in response to receiving a display instruction for displaying the one or more AR anchors, the one or more AR anchors in the viewfinder frame of the terminal in accordance with the information on the one or more AR anchors returned by the server-side in response to the request.

15. The method according to claim 8, wherein performing the image acquisition based on the first image-shooting information indicated by the one or more AR anchors comprises:
initiating, in response to detecting that second image-shooting information of the terminal matches the first image-shooting information, a countdown timer with a preset duration; and
acquiring image information in the viewfinder frame of the terminal after the countdown timer runs out.

16. The method according to claim 8, wherein performing the image acquisition based on the first image-shooting information indicated by the one or more AR anchors comprises:
generating, in response to detecting that second image-shooting information of the terminal matches the first image-shooting information, an image acquisition reminder;
receiving a second image acquisition instruction returned in response to the image acquisition reminder;
activating, in response to the second image acquisition instruction, a camera of the terminal to perform the image acquisition.

17. An anchor information processing apparatus, comprising:
an information request receiving module, configured to receive a request for obtaining augmented reality, AR, anchor information, wherein the request comprises scene information on a current scene in which a terminal is located, and the scene information comprises geographic location information and one or more current image-shooting conditions;
a candidate anchor determining module, configured to determine information on candidate anchors associated with the geographic location information; and
an anchor information obtaining module, configured to obtain, from the information on the candidate anchors, information on one or more AR anchors matching the one or more current image-shooting conditions, wherein the one or more AR anchors corresponding to the AR anchor information indicate first image-shooting information of a camera at the time of acquiring a sample image, and the first image-shooting information comprises at least one of: space coordinate information, or attitude information.

18. The apparatus according to claim 17, wherein the first image-shooting information further comprises at least one of a filter type or a zoom ratio.

19. The apparatus according to claim 17, wherein the one or more current image-shooting conditions comprise at least one of: time, weather, or light intensity of the current scene.

20. The apparatus according to claim 19,
wherein the current image-shooting conditions comprise the time and the weather of the current scene, and
wherein the anchor information obtaining module comprises:
a first to-be-selected anchor unit, configured to obtain, from the information on the candidate anchors, information on to-be-selected AR anchors having similar image-shooting time as the time of the current scene; and
a first information obtaining unit, configured to obtain, from the information on the to-be-selected AR anchors, the information on the one or more AR anchors having similar image-shooting weather as the weather of the current scene.

21. The apparatus according to claim 19,
wherein the one or more current image-shooting conditions comprise the time and the light intensity of the current scene, and
wherein the anchor information obtaining module comprises:
a second to-be-selected anchor unit, configured for subsequent anchor obtaining units and configured to obtain, from the information on the candidate anchors, information on to-be-selected AR anchors having similar image-shooting time as the time of the current scene; and
a second information obtaining unit, configured to obtain, from the information on the to-be-selected AR anchors, the information on the one or more AR anchors having similar image-shooting light intensity as the light intensity of the current scene.

22. The apparatus according to claim 19,
wherein the one or more current image-shooting conditions comprise the time, the weather and the light intensity of the current scene, and
wherein the anchor information obtaining module comprises:
a first information selecting unit, configured to obtain, from the information on the candidate anchors, information on first to-be-selected AR anchors having similar image-shooting time as the time of the current scene;
a second information selecting unit, configured to obtain, from the information on the first to-be-selected AR anchors, information on second to-be-selected AR anchors having similar image-shooting weather as the weather of the current scene; and
a third information obtaining unit, configured to obtain, from the information on the second to-be-selected AR anchors, the information on the one or more AR anchors having similar image-shooting light intensity as the light intensity of the current scene.

23. The apparatus according to claim 19, further comprising a scene information configuring module;
wherein the scene information configuring module comprises:
a configuration instruction receiving unit, configured to receive a scene configuration instruction, wherein the configuration instruction is used to configure the scene information for obtaining the information on the one or more AR anchors;
an association relationship generating unit, configured to generate an association relationship between the scene information and the information on each AR anchor according to the configuration instruction; and
a scene information configuring unit, configured to configure the scene information based on the association relationships.

24. An image acquisition device, comprising:
a scene obtaining module, configured to obtain, in response to a first image acquisition instruction from a terminal, scene information on a current scene in which the terminal is located, wherein the scene information comprises geographic location information and one or more current image-shooting conditions;
a request sending module, configured to send a request for obtaining augmented reality, AR, anchor information to a server-side, wherein the request comprises the scene information, and wherein one or more AR anchors corresponding to the AR anchor information indicate first image-shooting information of a camera at the time of acquiring a sample image, and the first image-shooting information comprises at least one of: space coordinate information, or attitude information;
an anchor displaying module, configured to display the one or more AR anchors in a viewfinder frame of the terminal in accordance with the information on the one or more AR anchors returned by the server-side in response to the request; and
an image acquiring module, configured to perform an image acquisition based on the first image-shooting information indicated by the one or more AR anchors.

25. The apparatus according to claim 24, wherein the first image-shooting information further comprises at least one of a filter type or a zoom ratio.

26. The apparatus according to claim 24, wherein the one or more current image-shooting conditions comprise at least one of: time, weather, or light intensity of the current scene.

27. The apparatus according to claim 24,
wherein the scene information further comprises at least one of data streams of the viewfinder frame; and
wherein the information on the one or more AR anchors comprises at least one of: a displaying form of each AR anchor, an identifier of an application package to be switched, coordinates of each AR anchor displayed in the viewfinder frame, a prompting way, or a way of displaying a reminder of image acquisition.

28. The apparatus according to claim 24, further comprising a scene information configuring module;
wherein the scene information configuring module comprises:
a configuration instruction receiving unit, configured to receive a scene configuration instruction, wherein the configuration instruction is used to configure the scene information for obtaining the information on the one or more AR anchors;
an association relationship generating unit, configured to generate an association relationship between the scene information and the information on each AR anchor according to the configuration instruction; and
a scene information configuring unit, configured to configure the scene information based on the association relationships.

29. The apparatus according to claim 24,
wherein the one or more AR anchors outline an AR viewfinder indication box; and
wherein the image acquiring module is further configured to activate, in response to detecting that the viewfinder frame matches the AR viewfinder indication box, a camera of the terminal to perform the image acquisition.

30. The apparatus according to claim 24, further comprising:
a prompt generating module, configured to generate a prompt message, wherein the prompt message is configured to inquire whether to display the one or more AR anchors;
wherein the anchor displaying module is further configured to display, in response to receiving a display instruction for displaying the one or more AR anchors, the one or more AR anchors in the viewfinder frame of the terminal in accordance with the information on the one or more AR anchors returned by the server-side in response to the request.

31. The apparatus according to claim 24, wherein the image acquiring module comprises:
a countdown initiating unit, configured to initiate, in response to detecting that second image-shooting information of the terminal matches the first image-shooting information, a countdown timer with a preset duration; and
an image information acquiring unit, configured to acquire image information in the viewfinder frame of the terminal after the countdown timer runs out.

32. The apparatus according to claim 24, wherein the image acquiring module comprises:
a reminder generating unit, configured to generate, in response to detecting that second image-shooting information of the terminal matches the first image-shooting information, an image acquisition reminder;
an instruction receiving unit, configured to receive a second image acquisition instruction returned in response to the image acquisition reminder;
an image acquiring unit, configured to activate, in response to the second image acquisition instruction, a camera of the terminal to perform the image acquisition.

33. An electronic device, comprising:
one or more processors; and
a memory for storing instructions executable by the one or more processors;
wherein the one or more processors are configured to:
receive a request for obtaining augmented reality, AR, anchor information, wherein the request comprises scene information on a current scene in which a terminal is located, and the scene information comprises geographic location information and one or more current image-shooting conditions;
determine information on candidate anchors associated with the geographic location information; and
obtain, from the information on the candidate anchors, information on one or more AR anchors matching the one or more current image-shooting conditions, wherein the one or more AR anchors corresponding to the AR anchor information indicate first image-shooting information of a camera at the time of acquiring a sample image, and the first image-shooting information comprises at least one of: space coordinate information, or attitude information.

34. A computer-readable storage medium storing a computer program, wherein the program, when being executed by one or more processors, implements:
receiving a request for obtaining augmented reality, AR, anchor information, wherein the request comprises scene information on a current scene in which a terminal is located, and the scene information comprises geographic location information and one or more current image-shooting conditions;
determining information on candidate anchors associated with the geographic location information; and
obtaining, from the information on the candidate anchors, information on one or more AR anchors matching the one or more current image-shooting conditions, wherein the one or more AR anchors corresponding to the AR anchor information indicate first image-shooting information of a camera at the time of acquiring a sample image, and the first image-shooting information comprises at least one of: space coordinate information, or attitude information.
